# EUROPÄISCHE PATENTSCHRIFT

(11) **EP 1 026 870 B1**
(45) Veröffentlichungstag und Bekanntmachung des Hinweises auf die Patenterteilung: **17.03.2004**
(21) Anmeldenummer: 99117637.1
(22) Anmeldetag: 08.09.1999
(51) Int. Cl.: H04M 3/38, H04M 1/66, H04M 1/68

(54) **Verfahren, System und Vorrichtung zum Erkennen einer widerrechtlichen Aufschaltung einer Kommunikationseinrichtung**
System and method to prevent unauthorised calling
Système et méthode pour la prévention d'appels frauduleux

(30) Priorität: 06.02.1999 DE 19904959
(43) Veröffentlichungstag der Anmeldung: 09.08.2000
(73) Patentinhaber: Deutsche Telekom AG, 53113 Bonn (DE)
(72) Erfinder: Kessler, Steffen, 57299 Burbach (DE); Lissmann, Rainer, 35085 Ebsdorfergrund (DE)

(56) Entgegenhaltungen:
- WO-A-95/35617
- US-A- 5 889 836
- US-A- 5 926 529

## Beschreibung

Die Erfindung betrifft ein System und ein Verfahren zum Erkennen einer unberechtigten Aufschaltung einer Kommunikations-Endeinrichtung auf eine analoge Teilnehmeranschlussleitung eines Kommunikationsnetzes sowie eine Detektoreinrichtung zum Einsatz in einem solchen System. Teilnehmer des weltweiten analogen Fernsprechnetzes melden ihren Teilnehmeranschluss bei einem Unternehmen an, das oftmals identisch mit dem Fernsprechnetzbetreiber ist. Zustandegekommene Verbindungen von einem bestimmten Teilnehmerabschluß werden gemäß den vertraglichen Vereinbarungen abgerechnet. Dem rechtmäßigen Nutzer einer Teilnehmeranschlusseinheit des Fernsprechnetzes werden die von seinen, an diesen Teilnehmeranschluß angeschalteten Endgeräten, wie etwa Telefon oder Telefaxgerät, zustandegekommenen Verbindungen in Rechnung gestellt. Das Fernsprechnetz liegt jedoch an manchen Stellen offen. Personen mit gewissen Sachkenntnissen können diese offenen Stellen nutzen, um von dort widerrechtlich Verbindungen im Fernsprechnetz aufzubauen. Durch diese als unberechtigte Aufschaltung bezeichnete widerrechtliche Verbindung nutzen die Personen das Fernsprechnetz kostenlos. Besonders problematisch in diesem Zusammenhang ist, dass die durch die Aufschaltung zustandegekommene Verbindung einem bestimmten Teilnehmeranschluss zugeordnet ist, das heißt, die widerrechtlichen Verbindungen werden einem Teilnehmer in Rechnung gestellt. Hierbei können sich erhebliche Rechnungsbeträge ergeben.

Die WO 95 35617 betrifft eine Schaltungsanordnung zum Schutz gegen einen Fremdeingriff in ein drahtgebundenes Telefonnetz. Hierbei werden jeweils ein Modulbaustein im Hauptverteiler mit Teilnehmeranschlusseinheit des Fernsprechamtes und ein Modulbaustein zwischen der TA-Anschlussdose und dem Fernsprechapparat angeordnet und jeweils mit beiden Leitungsadern a und b verbunden. Im Falle einer berechtigten Benutzung sind beide Modulbausteine in die zwischen der berechtigten Fernsprechendeinrichtung und dem Fernsprechamt während eines Gespräches bestehende Leitungsschleife einbezogen, welches mittels eines Austauschs von den Modulbausteinen jeweils zugeordneten übereinstimmenden Identifikationskennungen verifiziert wird. Entsprechend wird bei Nichtübereinstimmung der Kennungen oder bei Fehlen einer der Kennungen auf einen unberechtigten Fremdeingriff geschlossen und eine Sperrung oder eine Auftrennung der Leitung bewirkt sowie wahlweise ein Besetztzeichen auf die Leitung gelegt.

Der Erfindung liegt daher die Aufgabe zugrunde, ein weiteres Verfahren, ein weiteres System und eine weitere Detektoreinrichtung zu schaffen, mit denen eine unberechtigte Aufschaltung einer Endeinrichtung auf eine analoge Teilnehmeranschlussleitung eines Kommunikationsnetzes erkannt werden kann.

Dieses technische Problem löst die Erfindung zum einen mit den Verfahrensschritten des Anspruchs 1.

In dem erfindungsgemäßen Verfahren wird eine erste Detektoreinrichtung an eine erste vorbestimmte Stelle einer Teilnehmeranschlußleitung - vorteilhafterweise ist das eine teilnehmerseitige Netzabschlusseinrichtung oder der Port einer die Teilnehmeranschlußleitung abschließenden Vermittlungsstelle - zum Erfassen von Belegungszeiten einer Teilnehmeranschlussleitung angeschaltet. Diese Belegungszeiten werden aus den in einer vorbestimmten Richtung über die Teilnehmeranschlußleitung übertragenen Nutzsignalen ermittelt. Zum selben Zweck wird eine zweite Detektoreinrichtung zunächst an eine zweite vorbestimmte Stelle der Teilnehmeranschlussleitung - vorzugsweise zunächst in die die Teilnehmeranschlussleitung abschließende Vermittlungsstelle oder die teilnehmerseitige Netzabschlußeinrichtung, eingeschleift. Die über die Teilnehmeranschlussleitung übertragenen Nutzsignale werden von beiden Detektoreinrichtungen erfasst. Diese Nutzsignale können etwa Sprach- oder Datensignale darstellen. Die von den beiden Detektoreinrichtungen erfassten Belegungszeiten werden zweckmäßigerweise zunächst gespeichert und dann miteinander verglichen. Es ist hierbei sicherzustellen, dass eine unberechtigte Aufschaltung einer Endeinrichtung auf die Teilnehmeranschlußleitung beispielsweise an der zweiten Detektoreinrichtung einem Servicetechniker signalisiert wird.

Zweckmäßigerweise arbeiten die Detektoreinrichtungen synchron miteinander, derart, dass die Belegungszeiten der Teilnehmeranschlussleitung nur während einer vorbestimmten Zeitspanne erfasst und anschließend ausgewertet werden.

Vorteilhafte Weiterbildungen sind in den Unteransprüchen 2 bis 6 angegeben. Um die Stelle der unberechtigten Aufschaltungen orten zu können, kann beispielsweise die zweite Detektoreinrichtung um eine vorbestimmte Strecke entlang der Teilnehmeranschlussleitung in Richtung zur ersten Detektoreinrichtung verschoben werden. Anschließend werden die Belegungszeiten der Teilnehmeranschlussleitung in den beiden Detektoreinrichtungen erfasst. Die erfassten Belegungszeiten werden wiederum gespeichert und miteinander verglichen. Diese Verfahrensschritte werden solange wiederholt, bis der Vergleich von den beiden Detektoreinrichtungen erfassten Belegungszeiten übereinstimmend ausfällt. Für den Fall, dass während der Durchführung des Verfahrens von der teilnehmerseitigen Netzabschlusseinrichtung keine Verbindung abgeht, besteht diese Übereinstimmung nur dann, wenn die Detektoreinrichtungen feststellen, dass keine Nutzsignale über die Teilnehmeranschlussleitung übertragen werden.

In vorteilhafter Weise wird der fakultative Speicherschritt, der Vergleichsschritt und der Schritt zum Signalisieren einer unberechtigten Aufschaltung in einer sogenannten Auswerteeinrichtung durchgeführt.

Die Auswerteeinrichtung kann in der zweiten Detektoreinrichtung angeordnet sein. In diesem Fall werden die von der ersten Detektoreinrichtung erfassten Belegungszeiten der Teilnehmeranschlussleitung über eine separate leitungsgebundene Verbindung oder über eine Funkverbindung zur Auswerteeinrichtung der zweiten Detektoreinrichtung übertragen.

Alternativ kann die Auswerteeinrichtung zentral angeordnet oder Bestandteil einer zentralen Einrichtung sein. In diesem Fall werden die von der ersten und zweiten Detektoreinrichtung erfassten Belegungszeiten über eine Leitungs- oder Funkverbindung zur Auswerteinrichtung übertragen und dort ausgewertet.

Anstatt die von den Detektoreinrichtungen erfassten Belegungszeiten elektrisch, magnetisch oder optisch zu speichern und zu vergleichen werden die Belegungszeiten mittels einer Ausgabeeinrichtung, beispielsweise in Form eines Plotters, grafisch aufgezeichnet. Die grafisch aufgezeichneten Belegungszeiten werden anschließend von einem Servicetechniker verglichen.

Das technische Problem löst die Erfindung auch durch die Merkmale des Anspruchs 7.

Das System zur Erkennung einer unberechtigten Aufschaltung einer Kommunikationseinrichtung umfasst
eine erste Detektoreinrichtung, die an einer ersten vorbestimmten Stelle - vorzugsweise an der teilnehmerseitigen Netzabschlusseinrichtung oder an der die Teilnehmeranschlussleitung abschließenden Vermittlungsstelle - anschaltbar und zum Erfassen von Belegungszeiten einer Teilnehmer-Anschlussleitung ausgebildet ist,
eine zweite Detektoreinrichtung, die zunächst an einer zweiten vorbestimmten Stelle der Teilnehmeranschlussleitung anschaltbar und zum Erfassen von Belegungszeiten der Teilnehmeranschlussleitung ausgebildet ist, und
wenigstens eine Ausgabeeinrichtung zur grafischen Darstellung der von der ersten und zweiten Detektoreinrichtung erfassten Belegungszeiten.

Da vorzugsweise die erste Detektoreinrichtung zur Ortung einer Aufschaltungsstelle entlang der Teilnehmeranschlussleitung versetzt werden muß, kann der Arbeitsaufwand dadurch verringert werden, indem die Ausgabeeinrichtung der ersten Detektoreinrichtung zugeordnet wird. In diesem Fall weist die erste Detektoreinrichtung eine Sendeeinrichtung zum Übertragen der erfassten Nutzsignale über eine leitungsgebundene Verbindung oder eine Funkverbindung und die zweite Detektoreinrichtung eine entsprechende Empfangseinrichtung auf. Die zu vergleichenden Histogramme liegen somit unmittelbar am selben Ort vor.

Alternativ kann aber auch der ersten und zweiten Detektoreinrichtung jeweils eine Ausgabeeinrichtung zugeordnet sein. In diesem Fall müssen die an verschiedenen Orten aufgezeichneten Histogramme der Belegungszeiten zunächst einem Servicetechniker überreicht werden, bevor sie verglichen werden können.

Um das Aufzeichnen von Histogrammen und das manuelle Vergleichen der aufgezeichneten Belegungssignale zu umgehen,
ist eine mit beiden Detektoreinrichtungen verbindbare Auswerteeinrichtung vorgesehen, die eine fakultativ vorgesehene Speichereinrichtung zum Speichern der von der ersten und zweiten Detektoreinrichtung erfassten Belegungszeiten, eine Einrichtung zum Vergleichen der erfassten Belegungszeiten und eine Einrichtung zum Signalisieren einer unberechtigten Aufschaltung einer Endeinrichtung auf die Teilnehmeranschlussleitung enthält, wenn die verglichenen Belegungszeiten nicht übereinstimmen.

Jede Detektoreinrichung weist eine Sendeeinrichtung zur Übertragung der erfassten Belegungszeiten zur jeweils anderen Detektoreinrichtung und/oder eine Empfangseinrichtung zum Empfangen der erfassten Belegungszeiten von der jeweils anderen Detektoreinrichtung über eine separate Leitung oder eine Funkverbindung auf, wenn die Auswerteeinrichtung in einer der beiden Detektoreinrichtungen implementiert ist.

Alternativ kann die Auswerteeinrichtung zentral angeordnet und über eine leitungsgebundene Verbindung oder eine Funkverbindung mit den beiden jeweils eine entsprechende Sendeeinrichtung aufweisenden Detektoreinrichtungen verbunden sein.

Die Erfindung ist ferner in einer Detektoreinrichtung gemäß den Ansprüchen 13 bis 15 verwirklicht

Die Erfindung wird nachfolgend anhand eines Ausführungsbeispieles in Verbindung mit der beigefügten Figur näher erläutert.

Das Blockschaltbild in der Figur zeigt schematisch ein System zur Erkennung einer unberechtigten Aufschaltung einer Kommunikationseinrichtung 10, beispielsweise eines Telefons, an eine Teilnehmeranschlussleitung 5 eines analogen Festnetzes. Die Teilnehmeranschlussleitung 5 verbindet beispielsweise ein Telefon 10 mit der dazu gehörenden Vermittlungsstelle 20. Das Telefon 10 ist an einer beim Kunden installierten Netzabschlusseinrichtung angeschaltet. Zwischen dem Telefon 10 und der Vermittlungsstelle 20 ist unberechtigterweise ein Telefon 100 auf die Teilnehmeranschlußleitung 5 aufgeschaltet. Um die unberechtigte Aufschaltung des Telefon 100 erkennen zu können, ist eine Detektoreinrichtung 90a fest an die teilnehmerseitige Netzabschlusseinrichtung angeschaltet, mit der auch das Telefon 10 verbunden ist. Eine weitere Detektoreinrichtung 90b ist zunächst in unmittelbarer Nähe der Vermittlungsstelle 20 in die Teilnehmeranschlußleitung 5 eingeschleift, um die gesamte Teilnehmeranschlussleitung 5 überwachen zu können. Beide Detektoreinrichtungen 90a und 90b weisen eine Leitungsnachbildung 30 und einen Übertrager 40 mit Mittelanzapfung auf, über die die Detektoreinrichtungen in die Teilnehmeranschlußleitung 5 eingeschleift sind. Jeder Übertrager 40 ist derart in die Teilnehmeranschlußleitung eingeschleift, dass im Wesentlichen nur vom Telefon 10 kommende Signale in die jeweilige Detektoreinrichtung ausgekoppelt werden. Belegungszeiten werden in der Detektoreinrichtung 90b vom Übertrager 40 über eine an sich bekannte Rufton-Unterdrückungseinrichtung 50 und einen Signalverstärker 60 dem ersten Eingang einer Auswerteeinrichtung 80 zugeführt. Die Auswerteeinrichtung 80 enthält einen Speicher zum Ablegen der von den Detektoreinrichtungen 90a und 90b erfassten Belegungszeiten sowie eine Vergleichseinrichtung zum Vergleichen der gespeicherten Belegungszeiten. Zusätzlich ist eine elektrische, optische und/oder akustische Einrichtung zur Signalisierung einer unberechtigten Aufschaltung des Telefons 100 auf die Teilnehmeranschlussleitung 5 vorgesehen, die nur aktiviert wird, wenn die zu vergleichenden abgelegten Belegungszeiten nicht übereinstimmen. Die Detektoreinrichtung 90b weist ferner einen Funk-Empfänger auf, der die von der Detektoreinrichtung 90a übermittelten Funksignale empfangen kann. Die Detektoreinrichtung 90b weist ferner eine in die Teilnehmeranschlußleitung 5 geschaltete Schalteinrichtung 110 auf, die mit dem zweiten Eingang der Auswerteeinrichtung 80 verbunden ist. Die Schalteinrichtung 110 ist beispielsweise als Relais ausgebildet, das bei einem vorbestimmten durch die Teilnehmeranschlußleitung fließenden Schleifenstrom erregt wird.

Ausgekoppelte Signale werden in der Detektoreinrichtung 90a vom Übertrager 40 über eine an sich bekannte Rufton-Unterdrückungseinrichtung 50 und einen Signalverstärker 60 dem ersten Eingang eines Funksenders 70 zugeführt, der die erfassten Belegungszeiten zur Detektoreinrichtung 90b zur Auswertung aussendet. Die Detektoreinrichtung 90a weist ebenfalls eine in die Teilnehmeranschlußleitung 5 geschaltete Schalteinrichtung 110 auf, die mit dem zweiten Eingang des Funksenders 70 verbunden ist.

Die von dem Funkempfänger der Detektoreinrichtung 90b empfangenen Belegungszeiten werden als digitalisierte Daten zusammen mit den von der Detektoreinrichtung 90b erfassten Belegungszeiten in dem Speicher abgelegt. Die beiden Detektoreinrichtungen 90a und 90b arbeiten synchron, so dass nur die während eines vorbestimmten Zeitintervalls erfassten Belegungszeiten in dem Speicher abgelegt sind. Die Synchronisation der beiden Detektoreinrichtungen erfolgt beispielsweise über die jeweilige Schalteinrichtung 110, die die Auswerteeinrichtung 80 bzw. den Funksender 110 aktiviert.

Anstelle der in der Detektoreinrichtung 90b implementierten Auswerteeinrichtung 80 und dem in der Detektoreinrichtung 90a angeordneten Funksender 70 kann an dem Ausgang des jeweiligen Signalverstärkers 60 beispielsweise ein Plotter angeschaltet sein, der die erfassten Belegungszeiten grafisch über der Zeit aufträgt. In diesem Fall müssen die grafischen Ausdrucke manuell, das heißt von einem Servicetechniker verglichen werden. An dieser Stelle sei betont, dass die beiden oben beschriebenen Systeme lediglich Ausführungsbeispiele zur Erkennung einer unberechtigten Aufschaltung einer Kommunikationseinrichtung auf eine analoge Teilnehmeranschlußleitung darstellen.

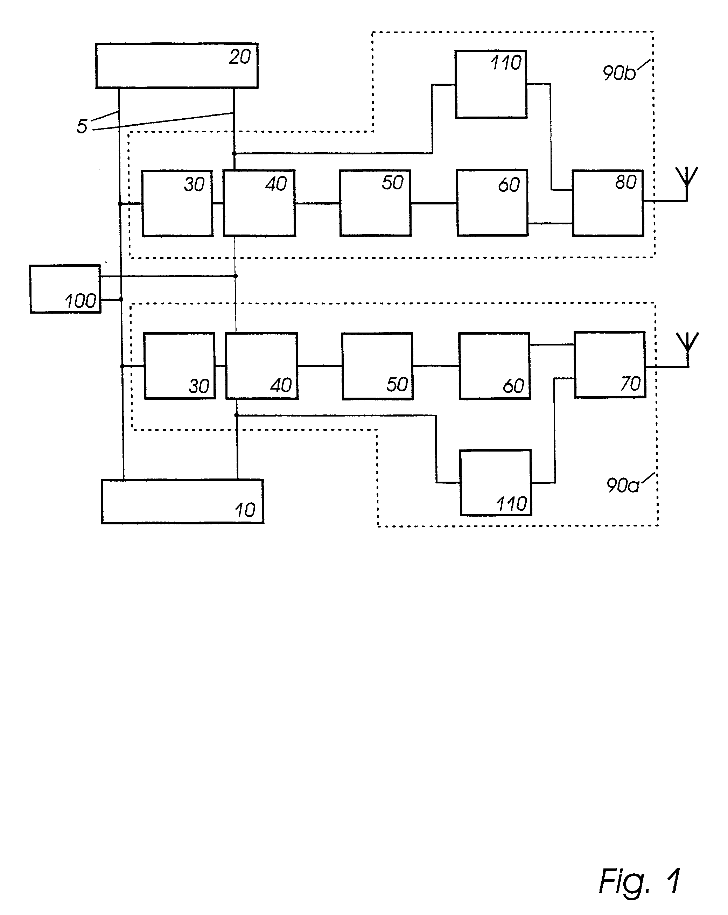

Die Funktionsweise des in Fig. 1 dargestellten System wird nachfolgend kurz erläutert.

Zunächst wird beim Benutzer des Telefons 10 die Detektoreinrichtung 90a an dessen Netzabschlusseinrichtung angeschaltet. Die andere Detektoreinrichtung 90b wird zunächst in unmittelbarer Nähe der Vermittlungsstelle 20 in die Teilnehmeranschlussleitung 5 eingeschleift. Es sei nunmehr angenommen, dass das Telefon 100 unberechtigterweise an die Teilnehmeranschlussleitung 5 angeschaltet wird. Die durch den Schleifenstrom in der Teilnehmeranschlussleitung aktivierte Detektoreinrichtung 90a erfasst die vom Telefon 10 hervorgerufenen Belegungszeiten und sendet diese über den Funksender 70 aus. Die Belegungszeiten werden von der Detektoreinrichtung 90b empfangen und in dem Speicher abgelegt. Ebenfalls werden die von der Detektoreinrichtung 90b erfassten Belegungszeiten in dem Speicher abgelegt. Die während eines vorbestimmten Zeitintervalls gespeicherten Belegungszeiten werden in der Auswerteeinrichtung 80 verglichen. Da infolge der Aufschaltung des Telefons 100 die von den Detektoreinrichtungen 90a und 90b erfassten Belegungszeiten nicht übereinstimmen, wird dem Servicetechniker über die Signalisierungseinrichtung eine unberechtigte Aufschaltung signalisiert. Um die Aufschaltungsstelle orten zu können, trennt der Servicetechniker die Detektoreinrichtung 90b von der Teilnehmeranschlussleitung ab und schleift diese an einer Stelle, die dem Telefon 10 näher liegt als die erste Meßstelle, wieder in die Teilnehmeranschlussleitung 5 ein. Danach werden die Belegungszeiten erneut erfasst und in der Auswerteeinrichtung 80 verglichen. Dieser Vorgang wird solange wiederholt, bis die Aufschaltungsstelle gefunden worden ist.

## Patentansprüche

1. Verfahren zum Erkennen einer unberechtigten Aufschaltung einer Kommunikations-Endeinrichtung auf eine analoge Teilnehmeranschlussleitung (5) eines Kommunikationsnetzes mit den Verfahrensschritten:
a) Anschalten einer ersten Detektoreinrichtung (90a) an eine erste vorbestimmte Stelle einer Teilnehmeranschlußleitung (5)zum Erfassen der Belegungszeiten dieser Leitung;
b) Anschalten einer zweiten Detektoreinrichtung (90b) an eine zweite vorbestimmte Stelle der Teilnehmer-Anschlussleitung (5) zum Erfassen von Belegungszeiten;
c) Erfassen von Belegungszeiten der Teilnehmeranschlussleitung (5) in den beiden Detektoreinrichtungen (90a, 90b) während einer vorbestimmten Zeitspanne;
d) Vergleichen der gespeicherten Belegungszeiten;
e) bei Nicht-Übereinstimmung der verglichenen Belegungszeiten wird eine unberechtigte Aufschaltung einer Endeinrichtung auf die Teilnehmeranschlussleitung (5) signalisiert.

2. Verfahren nach Anspruch 1, **dadurch gekennzeichnet, dass** nach Durchführung des Schrittes e) die zweite Detektoreinrichtung (90b) um eine vorbestimmte Strecke entlang der Teilnehmeranschlussleitung (5) in Richtung zur ersten Detektoreinrichtung (90a) verschoben wird, dass die Schritte b) bis e) solange wiederholt werden, bis die in Schritt d) verglichenen Belegungszeiten übereinstimmen, und
dass die erste vorbestimmte Stelle die teilnehmerseitige Netzabschlußeinrichtung oder ein Port der die Teilnehmeranschlußleitung (5) abschließenden Vermittlungsstelle (20) ist.

3. Verfahren nach Anspruch 1 oder 2, **dadurch gekennzeichnet, dass** die Schritte d) und e) in einer Auswerteeinrichtung (80) ausgeführt werden.

4. Verfahren nach Anspruch 3, **dadurch gekennzeichnet, dass** die Auswerteeinrichtung (80) in der zweiten Detektoreinrichtung (90b) angeordnet ist, und dass die von der ersten Detektoreinrichtung erfassten Belegungszeiten über eine separate Leitung oder eine Funkverbindung zur Auswerteeinrichtung (80) übertragen werden.

5. Verfahren nach Anspruch 3, **dadurch gekennzeichnet, dass** die Auswerteeinrichtung (80) zentral angeordnet ist, und dass die von der ersten und zweiten Detektoreinrichtung (90a bzw. 90b) erfassten Belegungszeiten über eine Leitungs- oder Funkverbindung zur Auswerteinrichtung (80) übertragen werden.

6. Verfahren nach Anspruch 1, **dadurch gekennzeichnet, dass** anstelle des Schrittes d) die von der jeweiligen Detektoreinrichtung erfassten Belegungszeiten grafisch aufgezeichnet und durch einen Servicetechniker verglichen werden.

7. System zur Durchführung des Verfahrens nach Anspruch 6 umfassend:
a) eine erste Detektoreinrichtung (90a), die an einer ersten vorbestimmten Stelle einer Teilnehmeranschlußleitung (5) zum Erfassen von Belegungszeiten dieser Leitung angeordnet ist,
b) eine zweite Detektoreinrichtung (90b), die an einer zweiten vorbestimmten Stelle der Teilnehmer-Anschlussleitung (5) anschaltbar und zum Erfassen von Belegungszeiten der Teilnehmer-Anschlussleitung (5) ausgebildet ist,
c) wenigstens eine Ausgabeeinrichtung zur grafischen Aufzeichnung der von der ersten und zweiten Detektoreinrichtung erfassten Belegungszeiten.

8. System nach Anspruch 7, **dadurch gekennzeichnet, dass** die Ausgabeeinrichtung der zweiten Detektoreinrichtung (90b) zugeordnet ist und dass
die erste Detektoreinrichtung (90a) eine Sendeeinrichtung zum Übertragen der erfassten Belegungszeiten über eine leitungsgebundene Verbindung oder eine Funkverbindung und die zweite Detektoreinrichtung (90a, 90b) eine entsprechende Empfangseinrichtung aufweist.

9. System nach Anspruch 7, **dadurch gekennzeichnet, dass** der ersten und zweiten Detektoreinrichtung (90a, 90b) jeweils eine Ausgabeeinrichtung zugeordnet ist.

10. System zur Durchführung des Verfahrens nach einem der Ansprüche 1 bis 5, umfassend:
a) eine erste Detektoreinrichtung (90a), die an einer ersten vorbestimmten Stelle einer Teilnehmeranschlußleitung (5) anschaltbar und zum Erfassen von Belegungszeiten dieser Leitung (5) ausgebildet ist,
b) eine zweite Detektoreinrichtung (90b), die an einer beliebigen Stelle der Teilnehmeranschlussleitung (5) anschaltbar und zum Erfassen von Belegungszeiten der Teilnehmer-Anschlussleitung (5) ausgebildet ist,
c) eine mit beiden Detektoreinrichtung verbindbare Auswerteeinrichtung (80) mit einer Einrichtung zum Vergleichen der erfassten Belegungszeiten und eine Einrichtung zum Signalisieren einer unberechtigten Aufschaltung einer Endeinrichtung (100) auf die Teilnehmeranschlussleitung (5), wenn die verglichenen Belegungszeiten nicht übereinstimmen.

11. System nach Anspruch 10, **dadurch gekennzeichnet, dass** jede Detektoreinrichung eine Sendeeinrichtung zur Übertragung der erfassten Belegungszeiten zur jeweils anderen Detektoreinrichtung und/oder eine Empfangseinrichtung zum Empfangen der erfassten Belegungszeiten von der jeweils anderen Detektoreinrichtung über eine separate Leitung und/oder eine Funkverbindung aufweist, und dass die Auswerteeinrichtung (80) in einer der beiden Detektoreinrichtung (90a) implementiert ist.

12. System nach Anspruch 10 oder 11,
**dadurch gekennzeichnet, dass** die Auswerteeinrichtung zentral angeordnet ist und über eine leitungsgebundene Verbindung oder eine Funkverbindung mit den beiden, jeweils eine entsprechende Sendeeinrichtung aufweisende Detektoreinrichtungen verbindbar ist.

13. System nach einem der Ansprüche 7 bis 12, **dadurch gekennzeichnet, dass** die erste vorbestimmte Stelle die teilnehmerseitige Netzabschlußeinrichtung oder ein Port der die Teilnehmeranschlußleitung (5) abschließenden Vermittlungsstelle (20) ist.

14. Detektoreinrichtung (90a, 90b) zum Einsatz in einem System nach einem der Ansprüche 10 bis 13 mit folgenden Merkmalen:
a) eine Einrichtung zum Anschalten der Detektoreinrichtung an eine analoge Teilnehmeranschlussleitung,
b) eine Einrichtung zum Erfassen von Belegungszeiten der Teilnehmer-Anschlussleitung,
c) eine Auswerteeinrichtung (80) mit einer Einrichtung zum Vergleichen der erfassten Belegungszeiten und eine Einrichtung zum Signalisieren einer unberechtigten Aufschaltung einer Endeinrichtung auf die Teilnehmer-Anschlussleitung, wenn die verglichenen Belegungszeiten nicht übereinstimmen.

15. Detektoreinrichtung (90a, 90b) zum Einsatz in einem System nach einem der Ansprüche 7- 9 mit folgenden Merkmalen:
a) eine Einrichtung (30, 40) zum Anschalten der Detektoreinrichtung an eine analoge Teilnehmeranschlussleitung (5),
b) eine Einrichtung zum Erfassen von Belegungszeiten der Teilnehmer-Anschlussleitung,
c) eine Ausgabeeinrichtung zur grafischen Aufzeichnung der erfassten Belegungszeiten.

16. Detektoreinrichtung nach einem der Ansprüche 7 bis 14,
**dadurch gekennzeichnet, dass**
die Anschalteinrichtung einen Übertrager (40) mit Mittelanzapfung zum Auskoppeln von zur Endeinrichtung 20) übertragenen Nutzsignalen aufweist, und das die Detektoreinrichtung ferner eine Telefon- und/oder Leitungsnachbildung (30), eine Ruftonunterdrückung (50) und eine Signalverstärkungseinrichtung (60 aufweist.

## Claims

1. Method for detecting the unauthorized connection of a communication terminal device to an analog subscriber line (5) of a communication network with the method steps:
a) connection of a first detector means (90a) to a first predetermined point of a subscriber line (5) for detecting the holding times of said line;
b) connection of a second detector means (90b) to a second predetermined point of the subscriber line (5) for detecting holding times;
c) detection of holding times of the subscriber line (5) in the two detector means (90a, 90b) during a predetermined time period;
d) comparing of the stored holding times;
e) in the case of non-agreement of the compared holding times, the unauthorized connection of a terminal device to the subscriber line (5) is signalled.

2. Method according to claim 1, **characterized in that**, after the performance of step e), the second detector means (90b) is moved by a predetermined distance along the subscriber line (5) towards the first detector means (90a),
**in that** steps b) to e) are repeated until the holding times compared in step d) agree, and
**in that** the first predetermined point is the subscriber-end network termination means or a port of the exchange (20) terminating the subscriber line (5).

3. Method according to claim 1 or 2, **characterized in that** steps d) and e) are executed in an evaluation means (80).

4. Method according to claim 3, **characterized in that** the evaluation means (80) is disposed in the second detector means (90b), and **in that** the holding times detected by the first detector means are transmitted via a separate line or a radio link to the evaluation means (80).

5. Method according to claim 3, **characterized in that** the evaluation means (80) is centrally disposed, and **in that** the holding times detected by the first and second detector means (90a and 90b) are transmitted via a line or radio link to the evaluation means (80).

6. Method according to claim 1, **characterized in that**, instead of step d), the holding times detected by the respective detector means are graphically recorded and are compared by a service technician.

7. System for implementing the method according to claim 6 comprising:
a) a first detector means (90a), said first detector means (90a) being disposed at a first predetermined point of a subscriber line (5) for detecting holding times of said line;
b) a second detector means (90b), said second detector means (90b) being connectable at a second predetermined point of the subscriber line (5) and being designed to detect holding times of the subscriber line (5);
c) at least one output means for graphically recording the holding times detected by the first and second detector means.

8. System according to claim 7, **characterized in that** the output means is associated with the second detector means (90b) and **in that** the first detector means (90a) has a transmitting means for transmitting the detected holding times via a wire-bound connection or a radio link and the second detector means (90a, 90b) has a corresponding receiving means.

9. System according to claim 7, **characterized in that** the first and second detector means (90a, 90b) are each associated with an output means.

10. System for implementing the method according to any one of claims 1 to 5, comprising:
a) a first detector means (90a), said first detector means (90a) being connectable at a first predetermined point of a subscriber line (5) and being designed to detect holding times of said line (5);
b) a second detector means (90b), said second detector means (90b) being connectable at any point of the subscriber line (5) and being designed to detect holding times of the subscriber line (5);
c) an evaluation means (80) connectable to both detector means with a means for comparing the detected holding times and a means for signalling the unauthorized connection of a terminal device (100) to the subscriber line (5) if the compared holding times do not agree.

11. System according to claim 10, **characterized in that** each detector means has a transmitting means for transmitting the detected holding times to the other detector means and/or a receiving means for receiving the detected holding times from the other detector means via a separate line and/or a radio link, and
**in that** the evaluation means (80) is implemented in one of the two detector means (90a).

12. System according to claim 10 or 11,
**characterized in that** the evaluation means is centrally disposed and is connectable via a wire-bound connection or a radio link to the two detector means, said detector means each having a corresponding transmitting means.

13. System according to any one of claims 7 to 12, **characterized in that** the first predetermined point is the subscriber-end network termination means or a port of the exchange (20) terminating the subscriber line (5).

14. Detector means (90a, 90b) for use in a system according to any one of claims 10 to 13 with the following features:
a) a means for connecting the detector means to an analog subscriber line;
b) a means for detecting holding times of the subscriber line;
c) an evaluation means (80) with a means for comparing the detected holding times and a means for signalling the unauthorized connection of a terminal device to the subscriber line if the compared holding times do not agree.

15. Detector means (90a, 90b) for use in a system according to any one of claims 7 to 9 with the following features:
a) a means (30, 40) for connecting the detector means to an analog subscriber line (5);
b) a means for detecting holding times of the subscriber line;
c) an output means for graphically recording the detected holding times.

16. Detector means according to any one of claims 7 to 14, **characterized in that** the connection means has a transformer (40) with centre tap for outcoupling of useful signals transmitted to the terminal device (20), and **in that** the detector means additionally has a telephone and/or line simulator (30), a ring tone suppressor (50) and a signal amplification means (60).

## Revendications

1. Procédé de détection d'une connexion non autorisée d'un équipement terminal de communication sur une ligne analogique d'abonné (5) d'un réseau de communication, comprenant les actions suivantes :
a) connexion d'un premier équipement de détection (90a) à un premier point prédéfini d'une ligne de raccordement d'abonné (5) aux fins de saisie des temps d'occupation de ladite ligne ;
b) connexion d'un deuxième équipement de détection (90b) à un deuxième point prédéfini de la ligne de raccordement d'abonné (5) aux fins de saisie des temps d'occupation ;
c) saisie des temps d'occupation de la ligne de raccordement d'abonné (5) dans les deux équipements de détection (90a, 90b) pendant un intervalle de temps prédéfini ;
d) comparaison des temps d'occupation enregistrés ;
e) si les temps d'occupation comparés ne concordent pas, une connexion non autorisée d'un équipement terminal sur la ligne de raccordement d'abonné (5) est signalée.

2. Procédé selon la revendication 1, **caractérisé en ce que**, après l'action e), le deuxième équipement de détection (90b) est décalé d'une longueur prédéfinie le long de la ligne de raccordement d'abonné (5) en direction du premier équipement de détection (90a), les actions b) à e) étant répétées jusqu'à ce que les temps d'occupation comparés en d) concordent et
**en ce que** le premier point prédéfini est constitué par l'équipement de terminaison de réseau du côté de l'abonné ou par un port du central (20) où se termine la ligne de raccordement d'abonné (5).

3. Procédé selon l'une des revendications 1 ou 2, **caractérisé en ce que** les actions d) et e) sont exécutées à l'intérieur d'un dispositif d'analyse (80).

4. Procédé selon la revendication 3, **caractérisé en ce que** le dispositif d'analyse (80) est placé dans le deuxième équipement de détection (90b), les temps d'occupation saisis par le premier équipement de détection étant transmis vers le dispositif d'analyse (80) sur une ligne séparée ou par liaison radio.

5. Procédé selon la revendication 3, **caractérisé en ce que** le dispositif d'analyse (80) est centralisé, les temps d'occupation saisis par le premier et le deuxième équipement de détection étant transmis vers le dispositif d'analyse (80) par liaison filaire ou radio.

6. Procédé selon la revendication 1, **caractérisé en ce que**, au lieu de l'action d), les temps d'occupation saisis par l'équipement de détection sont relevés sous forme graphique et comparés par un technicien de soutien.

7. Système servant à l'exécution du procédé visé à la revendication 6, comprenant :
a) un premier équipement de détection (90a) placé à un premier point prédéfini d'une ligne de raccordement d'abonné (5) aux fins de saisie des temps d'occupation de ladite ligne,
b) un deuxième équipement de détection (90b) connectable à un deuxième point prédéfini de la ligne de raccordement d'abonné (5) et destiné à saisir les temps d'occupation de la ligne de raccordement d'abonné (5),
c) au moins un dispositif fournissant une représentation graphique des temps d'occupation saisis par le premier et le deuxième équipement de détection.

8. Système selon la revendication 7, **caractérisé en ce que** le dispositif fournissant la représentation graphique est assigné au deuxième équipement de détection (90b), le premier équipement de détection (90a) présentant un dispositif d'émission servant à transmettre les temps d'occupation saisis par une liaison filaire ou radio et le deuxième équipement de détection (90a, 90b) présentant un dispositif de réception correspondant.

9. Système selon la revendication 7, **caractérisé en ce qu'**un dispositif fournissant une représentation graphique est assigné à chacun des deux équipements de détection (90a, 90b).

10. Système servant à l'exécution du procédé visé à l'une des revendications 1 à 5, comprenant :
a) un premier équipement de détection (90a) connectable à un premier point prédéfini d'une ligne de raccordement d'abonné (5) et destiné à saisir les temps d'occupation de cette ligne (5),
b) un deuxième équipement de détection (90b) connectable à un point quelconque de la ligne de raccordement d'abonné (5) et destiné à saisir les temps d'occupation de la ligne de raccordement d'abonné (5),
c) un dispositif d'analyse (80) connectable aux deux équipements de détection, avec un dispositif permettant la comparaison des temps d'occupation saisis et un dispositif de signalisation de connexion non autorisée d'un équipement terminal (100) sur la ligne de raccordement d'abonné (5) pour le cas où les temps d'occupation comparés ne concordent pas.

11. Système selon la revendication 10, **caractérisé en ce que** chaque équipement de détection comprend un dispositif de transmission des temps d'occupation saisis vers l'autre équipement de détection et/ou un dispositif de réception des temps d'occupation saisis provenant de l'autre équipement de détection par une ligne séparée et/ou une liaison radio, le dispositif d'analyse (80) étant réalisé dans l'un des deux équipements de détection (90a).

12. Système selon l'une des revendications 10 ou 11, **caractérisé en ce que** le dispositif d'analyse est centralisé et connectable par une liaison filaire ou radio aux deux équipements de détection présentant chacun un dispositif de transmission adéquat.

13. Système selon l'une des revendications 7 à 12, **caractérisé en ce que** le premier point prédéfini est l'équipement de terminaison de réseau du côté de l'abonné ou un port du central (20) où se termine la ligne de raccordement d'abonné (5).

14. Equipement de détection (90a, 90b) pour utilisation dans un système selon l'une des revendications 10 à 13, comportant les éléments suivants :
a) un dispositif de connexion de l'équipement de détection à une ligne de raccordement d'abonné analogique,
b) un dispositif de saisie des temps d'occupation de la ligne de raccordement d'abonné,
c) un dispositif d'analyse (80) comprenant un dispositif permettant la comparaison des temps d'occupation saisis et un dispositif de signalisation de connexion non autorisée d'un équipement terminal sur la ligne de raccordement d'abonné pour le cas où les temps d'occupation comparés ne concordent pas.

15. Equipement de détection (90a, 90b) pour utilisation dans un système selon l'une des revendications 7 à 9, comportant les éléments suivants :
a) un dispositif (30,40) de connexion de l'équipement de détection à une ligne de raccordement d'abonné analogique (5),
b) un dispositif de saisie des temps d'occupation de la ligne de raccordement d'abonné,
c) un dispositif fournissant une représentation graphique des temps d'occupation saisis.

16. Equipement de détection selon l'une des revendications 7 à 14, **caractérisé en ce que**
le dispositif de connexion comprend un transformateur (40) avec prise médiane pour découplage de signaux utiles transmis vers l'équipement terminal (20) et **en ce que** l'équipement de détection présente en outre un montage équivalent (téléphone et/ou ligne) (30), une suppression de tonalité (50) et un amplificateur de signal (60).
